(19) Europäisches Patentamt
European Patent Office
Office européen des brevets

(11) **EP 3 975 077 A1**

(12) **EUROPEAN PATENT APPLICATION**

(43) Date of publication:
**30.03.2022 Bulletin 2022/13**

(21) Application number: **20198778.1**

(22) Date of filing: **28.09.2020**

(51) International Patent Classification (IPC):
**G06Q 10/00** $^{(2012.01)}$    **G06Q 50/04** $^{(2012.01)}$

(52) Cooperative Patent Classification (CPC):
**G06Q 10/00; G06Q 50/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **The designation of the inventor has not
yet been filed**

(54) **MONITORING DEVICE AND METHOD FOR SEGMENTING DIFFERENT TIMES SERIES OF SENSOR DATA POINTS**

(57)    Monitoring device (200) for segmenting different time series of sensor data points representing at least one measured parameter of a technical system (100) to detect different types of physical processes of the technical system (100), comprising

an analysing unit (202) configured to iteratively for each sensor data point of a time series of sensor data points and iteratively for each time series of all different sensors,
- obtain (S1) an actual sensor data point,
- determine whether the actual sensor data point is an outlier (S3) and mark it accordingly,
- determine (S4) whether the actual data point represents a discontinuity,
- determine a slope (S5) by a regression model of a slope equation of a straight line in time fitted to at least a predefined first number of subsequently obtained sensor data points, and determine whether the actual sensor data point belongs to the learned regression model,
- if the actual sensor data point does not belong to the learned regression model, determine a new slope by learning a new regression model based on the actual data point and a predefined second number of preceding sensor data points, and
- create (S6) a segment comprising all sensor data points of one learned regression model, and
a display unit configured to
- display each sensor data point of the time series of sensor data points indicating the determined segment or being an outlier.

FIG 1

**Description**

The present disclosure relates to a monitoring device and method for segmenting different time series of sensor data points representing at least one measured parameter of a technical system to detect different types for physical processes of the technical system.

In various technical fields there is a need to monitor operation of machines or generally technical systems. For example, in the field of oil and gas production, steel production or paper mills a large number of devices as combustion engines, electronic devices and pumps may be monitored for purpose of providing preventive maintenance, anomaly detection and thereby availability.

Sensors are omnipresent in all kind of heavy machinery and technical systems. Generally, it is not the analysis of the specific values outputted by sensors that is of interest but inferring the underlying technical processes from the sensor values. If the characteristics of the underlying technical process are known only qualitatively, i.e. it is know which sensors will raise and fall given one specific type, but with no quantitative expectations, i.e. sensor X will raise by x units over y minutes, the sensor data needs to be transformed such that it matches the qualitative features of the domain expectations.

A main goal of analysing time series of sensor data is to protect the technical system, e.g. a pump, of damages and failure. Therefore, the goal is to detect pattern in the sensor data that characterise anomalies and anomalous behaviour of the technical system which indicates anomalous operation of the equipment before it fails. This allows the operator of the technical system to take counter measures very timely which is extremely important to prevent further harm to the technical systems and causes extensive costs for repair or down time of the technical system.

E.g. for a technical system which is an electrical submersible pump, which is mining an oil downhole. Sensors are installed on these pumps in order to measure e.g. bottomhole-, wellhead- and casing- pressure as well as oil temperature and motor current which enables monitoring of the state of the pump system as a whole. For various pump failure scenarios, the sensor values typically show suspicious patterns and anomalies in the sensor data which allow to estimate the root cause and the potential damage of the pump.

Conventionally monitoring and control of technical systems like pumps is performed via visual inspection of the sensor time series in order to identify segments within the time series indicating abnormal behavior. Such an approach is error-prone, does not allow for handling of large amount of data and is typically not capable of spotting complex non-linear patterns.

There exists a large amount of various approaches ranging from simple rule-based systems, statistical methods to machine learning methodologies. Most of these standard methodologies require some kind of pre-processing of the data like outlier-removals, decorrelation, data smoothing and the like, which hinder human interpretation of the results and the applied changes of physical processes of the monitored technical system.

Rule based evaluation systems typically rely on fixed thresholds. These approaches firstly do not allow to find segments and secondly, do not allow to disentangle the different types of segments. Statistical methods such as autoregressive models, moving averages, and combination thereof are capable of identifying gradual changes in the sensor data, but get strongly biased by abrupt changes, such as jumps and frequency changes in the time series of sensor data. Machine learning approaches as deep neural networks typically require labelled data for spotting anomalies. Even state of the art unsupervised methods which do not require labels are not able to distinguish between different segment types.

The main problem related to the detection of anomalies behaviour relates to the very different types of physical processes that induce failure of a pump or other technical systems.

Therefore, it is the object of the present application to identify different types of physical processes in a technical system from time series of sensor data representing parameters of the technical system.

The object is solved by the features of the independent claims. The dependent claims contain further development of the invention.

The first aspect relates to a monitoring device for segmenting different time series of sensor data points representing at least one measured parameter of a technical system to detect different types of physical processes of the technical system, comprising an analysis unit configured to iteratively for each sensor data point of a times series of sensor data points and iteratively for each time series of all different sensors,

- obtain an actual sensor data point,
- determine whether the actual data point is an outlier and mark it accordingly,
- determine whether the actual data point represents a discontinuity,
- determine a slope by a regression model of a slope equation of a straight line in time fitted to at least a predefined first number of subsequently obtained sensor data points, and determine whether the actual sensor data point belongs to the learned regression model,
- if the actual sensor data point does not belong to the learned regression model, determine a new slope by learning a new regression model based on the actual data point and a predefined second number of preceding sensor data points, and

- create a segment comprising all sensor data points of one learnt regression model, and

a display unit configured to

- display each sensor data point of the time series of sensor data points indicating the determined segment or being an outlier.

One important class of physical processes are the ones that develop gradually over time, eventually leading to a failure. Such physical processes can be monitored by the gradients of the time series of sensor data points with respected time. Gradient and slope are used here as synonyms. Also, a second class of processes where sudden events change the system lead to failures, such as a broken shaft resulting in sudden changes, producing a discontinuity especially a jump discontinuity in the timelines of sensor data. As each sensor data point of a time series is processed iteratively no pre-processing as rendering or smoothing hinders detection of sudden changes. Every single data point is evaluated and considered for indicating a change in a physical process. A segment of subsequent data points belonging to one learned regression model indicates a gradually developing physical processes. The first and second predefined number can have different value but preferably have the same value.

According to an embodiment the device determines an operation mode change by additionally evaluating a sensor data value of a sensor indicating an operation mode of the technical system for the point in time of the actual sensor data point.

If a physical parameter exists which, in a reliable way, indicates a change in operation mode of the technical system, this parameter is measured by a sensor and the respective sensor data timeline is additionally monitored and evaluated by the analysing unit. This allows early detection of a change of the operation mode of the technical system that might be selected and set intentionally or occurs regularly during operation mode of the technical system.

According to a further preferred embodiment the device is configured such that the actual sensor data point is determined as an outlier, if a relative change between the values of the actual sensor data point and an adjacent sensor data point exceeds a first threshold.

Deciding on a relative change between the values of the actual and an adjacent data point and especially setting a first threshold for that value allows flexible adaption of threshold values according to the type of parameter measured by the sensor. For example, deviations between sensor data points of a temperature sensor may vary inside one physical state of the technical system much more than the sensor data points of a pressure sensor, which might show very stable values without significant variation in the same physical state.

In a preferred embodiment the device is configured to determine a discontinuity, especially a jump discontinuity, if a predefined third number of subsequent data points preceding the actual sensor data point are marked as outliers.

This feature allows differentiating whether the actual sensor data point is just an outlier, or it is part of a series of sensor data points which deviate by a value according to the first threshold indicating an outlier, e.g. sensor data points subsequent to a jump discontinuity. As a jump in the sensor data time series is an indication of a second class of physical processes with sudden events change in the technical system, detecting such a jump provides very relevant information with respect to a physical process change.

In a further preferred embodiment, the monitoring device is configured such that the slope is determined by the regression model minimizing a first distance measure between the subsequently obtained sensor data points and the slope equation.

This provides a good approximation of the course of the subsequent sensor data point. Further such a minimizing operation is of low complexity and can therefore be performed fast and by a device or processor of medium or even low performance. As an example, an Euclidian distance can be used as first distance measure.

In a further preferred embodiment the actual data point belongs to the learned regression model, if a statistical significance of a cumulative deviation between the values resulting from the slope equation, i.e. forecasted values, and the test set of sensor data points including the actual data point is below a predefined second threshold.

The values resulting from or being forecasted by the slope equation are obtained by setting the same value in time into the slope equation as the time of the data point it shall be compared with. The statistical significance provides a reliable parameter for classifying a data point being "in line" with the slope equation and the regression model respectively. By the predefined second threshold the deviation and the value of this actual sensor data point can be adapted to the actual monitored parameter of the technical system measured by the sensor. The test set of sensor data points includes besides the actual data point also a predefined fourth number of proceeding subsequent data points.

As an alternative preferred embodiment, the actual data point belongs to the learned regression model, if the cumulative deviation between values resulting from the slope equation, i.e. forecasted values, and the test set of sensor data points including the actual data point is inside a predefined confidence band.

If the cumulative deviation, also called the variance, of the test set of sensor data point is outside the predefined confidence band a regression model for a new slope equation of a straight line is learnt and a new segment is created.

In a preferred embodiment the actual sensor data point does not belong to the learned regression model, if the cumulative deviation is outside a predefined confidence band.

The various possibilities to determine whether the actual data point belongs to the learned regression model enables finding initial slopes and simultaneously disentangle them from jump discontinuities or mode changes indicated by a dedicated sensor.

The preferred embodiment, the determined segments are classified into categories by setting a predefined third threshold on a normalized slope coefficient of subsequent segments comprising all sensor data points of subsequently learned regression models having a slope in a predefined value range.

Creating categories, also named categorized segments, comprising all sensor data points of subsequent learnt regression model having a slope coefficient in a predefined value range, e.g., an increasing, decreasing or stationary slope, can reveal also non-linear function in the timeline in a low processing capacity requiring way. Complex non-linear patterns are taken into account because the linear regression lines are applied in a piecewise fashion to the sequence and are able to approximate any non-linear function.

In a preferred embodiment the device comprises a user input unit configured to receive at least one of a value for any predefined number of data points and predefined threshold from a domain expert.

This enables adapting the configuration of the monitoring device to the actual monitored technical system in a flexible way and to adapt the monitoring device to changing behaviour during the lifetime of the technical system or operation modes of the technical system changed intentionally. Predefined numbers are, e.g., the first, second, third and fourth number of sensor data points and the first or second threshold. It also allows a feedback of the domain expert who can interpret the displayed output of the monitoring device and allows changing the various predefined numbers and thresholds to fit to the actual state and operation modus of the technical system.

In the preferred embodiment each time series of the different sensors is separately processed.

This has the advantage that the device scales to high dimensional.

In a preferable embodiment an individual learning model is created for the different sensors and merged models into one single model.

This allows a joint evaluation and analysis of different sensor timelines.

In a preferred embodiment of the monitoring device the segments and/or categories are assigned to physical processes of the technical system.

From previous segmentation of the different sensor timelines which could be assigned to physical processes of the technical system a rule can be derived and applied to further groups of segments of different sensor timelines which comply to the derived rule.

Therefore, already a prejudgment in terms of physical process of the technical system can be achieved and displayed by the monitoring device.

A further aspect of the invention concerns a method for segmenting different time series of sensor data points representing at least one measured parameter of a technical system to detect different types of physical processes of the technical system, for each sensor data point of a time series of sensor data points and iteratively for time series of all different sensors comprising the steps:

- obtaining an actual sensor data point
- determining whether the actual data point is an outlier and marking it as an outlier,
- determining whether the actual data point represents a discontinuity,
- determining a slope by a regression model of a slope equation of a straight line in time fitted to at least a predefined first number of subsequently obtained sensor data points, and determining whether the actual sensor data point belongs to the learned regression model,
- if the actual sensor data point does not belong to the learned regression model, determine a new slope by learning a new regression model based on the actual data point and a predefined second number of proceeding sensor data points, and
- creating a segment comprising all sensor data points of subsequent learned regression models, having a slope in a predefined value range, and
- displaying each sensor data point of the times series of sensor data points indicating the determined segment or being an outlier.

The method enables to identify segments of different types in unlabelled data, e.g. identifying slopes of gradual behaviour, detecting jump discontinuities which indicate abrupt changes induced by real physical process of the technical system. The method enables further to detect outliers which indicate an abrupt change due to measurement errors, noise, and the same. With a method also different types of segments can be disentangled, anomalous behaviour from complex non-linear patterns of high dimensional sensor data can be found and it provides the ability to perform an interpretable over-arching comparison of different segments and categories of sensor data. As the method is of low processing complexity large amounts of sensor can be handled. The output is human readable and domain knowledge can be integrated by configuring various threshold values or numbers of sensor data points which have to be considered.

A further aspect of the present invention concerns a computer program product directly loadable into the internal memory or the digital computer comprising software code portions for performing the steps of claim 14 when said product is run on said digital computer.

In the following, embodiments of the present disclosure will be described in more detail and with reference to the accompanying drawings.

Fig. 1         illustrates an example of a monitoring environment including an embodiment of the inventive monitoring device.

Fig. 2         schematically illustrates processing steps performed on the sensor data points in the analysing unit and an exemplary embodiment of the output shown in the display unit of the monitoring device.

Fig. 3A-3H    illustrate detailed steps of slope determination and segmenting performed in the analysing unit.

It is noted that in the following detailed description of embodiments the accompanied drawings are only schematic. The illustrated elements are not necessarily shown to scale.

Rather, the drawings are intended to illustrate functionals and for cooperation of components, e.g. the analysing unit, the display unit and the input unit. Functional blocks can be implemented by dedicated hardware, by firmware and all software installed by a programmable hardware and/or by a combination of dedicated hardware and firmware and software. It is recognised that any circuit, processor or other electrical device disclosed herein may include any number of micro controllers, graphics processor units (GPU), integrated circuits, memory devices and software which co-act with one another to perform operations discloses herein.

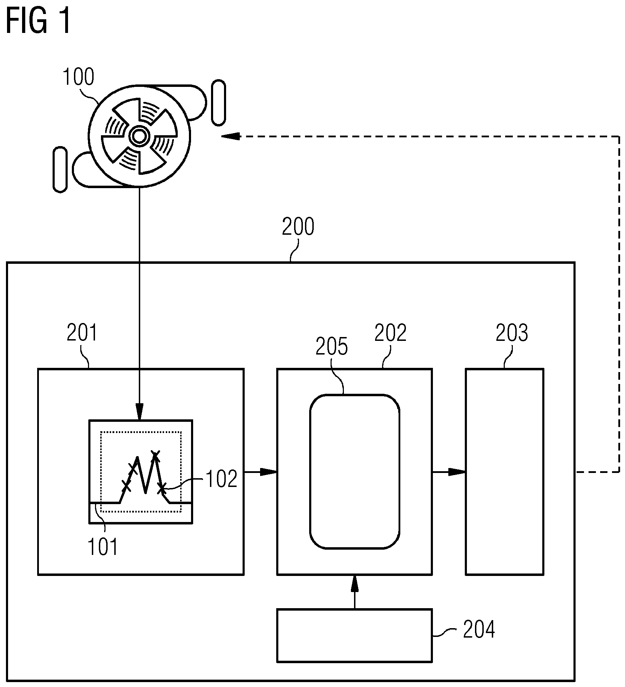

Figure 1 shows a monitoring environment comprising monitoring device 200 for segmenting different time series 101 of sensor data points 102. The time series 101 of sensor data points 102 are obtained by different sensors measuring different parameters of the monitored technical system 100 over time. The monitoring device 200 comprises a sensor data provisioning unit 201, an analysing unit 202, a display unit 203, and a user input unit 204. A timeline 101 of sensor data points 102 is received from the technical system 100 by the sensor data provision unit 201.

The technical system 100 which is monitored can be any kind of machine or system of machines, but also devices applied in industrial plants and energy distribution systems or transport system. As an example, here a submersible pump is described as technical system. In the technical system 100 several sensors are installed in order to measure physical parameters, e.g. bottomhole-, wellhead- and casing- pressure as well as oil temperature and motor current, which enables monitoring the state of the pump system as a whole. For various pump failure scenarios, the sensor values typically show suspicious patterns and anomalies in the data which allow to estimate the root cause and the potential damage of the pump. Also, different stages or physical processes are reflected by the sensor values and their development over time.

These timelines 101 of sensor data points 102 are received in the sensor data prevision unit 201. Actual sensor data points may be received in the provisioning unit 201 as they are generated, i.e. "on-line" and forwarded to the analysing unit 202. As an alternative also historical timelines of sensor data points can be stored in the sensor data provision unit 201 and forwarded to the analysing unit 202 for "off-line" evaluation.

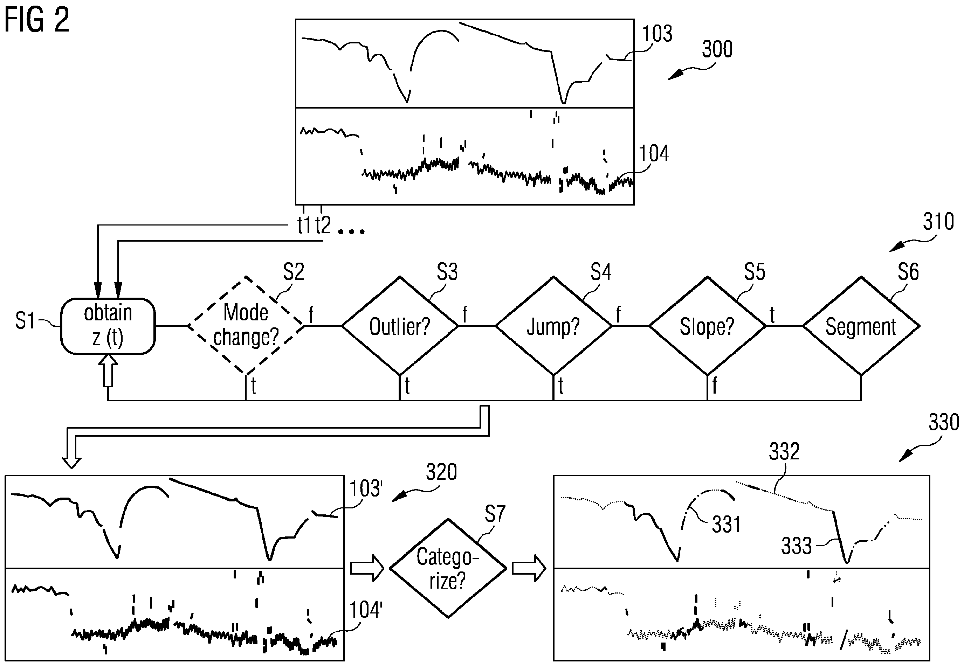

The analysing unit 202 obtains an actual sensor data point 102. Without any further pre-processing of the obtained data point or the timeline of sensor data points, iteratively each sensor data point of the time series is processed as illustrated in figure 2 and described below. The processed and analysed data points are marked according to the assigned segments. The segments are optionally categorized by combining different segments according to predefined rules and thresholds. Various predefined numbers and thresholds used as settings in the analysing unit 202 can be input by a domain expert via the user input unit 204 and forwarded to the analysing unit 202. The domain expert can input or change these values to adapt the analysing unit to the type of monitored technical system 100 or to adapt it to different used cases and operation modes.

Display unit 203 provides means to display the analysed time series of sensor data points indicating the segments, the data point is determined to and/or indicating that data point as an outlier and/or indicating categories of segments. Operation staff can derive from the displayed information different types of physical processes of the technical system 100 and adapt settings of the technical system 100 according the type of physical process or take counter measures and the like.

Figure 2 illustrates the functionalities and steps performed by the analysing unit 202. It processes a time series 103 of sensor data points of a first sensor and a second time series 104 of sensor data points of a different second sensor as shown in diagram 300. Iteratively, sensor data points of time series 103 are obtained and processed in the analysis unit 202. After the finishing processing the sensor data points of time series 103 the same procedure applies to each of the data points of time series 104.

An embodiment of the method and its processing steps applied to an actual sensor data point z(t) and performed in the analysing unit of the monitoring device is illustrated by flow diagram 310. The sequence of the single processing steps is exemplary for this specific embodiment. The invention is not restricted to this sequence but covers also deviations to that sequence.

As a first optional step S1 the actual sensor data point z(t) is obtained from the sensor data provision unit 201. Optionally, a sensor data value of a sensor is evaluated indicating an operation mode of the technical system 100 at the same point in time t as the actual sensor data z(t), see S2. As an example, a frequency of the technical system 100 indicates a physical mode and a frequency change indicates a change in the physical mode. A timeline of such frequency sensor data points detected at the same time as actual sensor data point z(t) is evaluated to detect potential frequency changes. A frequency change is detected if the absolute difference of the frequency between the actual data point and the proceeding data point exceeds are given threshold. If a frequency change is detected, the actual sensor data point z(t) is marked as such and a next iteration starts obtaining the subsequent data point of time series 103.

If at the time represented by the actual sensor data point z(t) no operation mode change is detected, it is determined in step S3, whether the actual data point is an outlier. The actual sensor data point z(t) is determined an outlier if a relative change between the value of the actual sensor data point z(t) and an adjacent previous sensor data point exceeds a pre-defined first threshold. If this is true, the actual data point is marked as an outlier. As an example the actual data point is marked as an outlier if the percentage of increase or decrease between the actual and the previous sensor data value is greater than 0.5 %, the actual data points z(t) is marked as an outlier. In this case next data point z(t+1) is obtained, see step S1 and processing starts as described before.

If the actual data point is not an outlier the analysing unit 202 proceeds to step S4 determining whether the actual data point z(t) represents a discontinuity, especially a jump discontinuity. At step S4 a discontinuity is determined, if a predefined third number of subsequent data points proceeding the actual sensor data point z(t) are marked as outliers. If a discontinuity is detected, the actual data point is marked accordingly, and the next data point is obtained in step S1.

If no discontinuity is detected a slope is determined by a regression model of a slope equation of a straight line in time fitted to at least a predefined first number of subsequently obtained sensor data points. The calculation of the slope builds on a parametric regression model which calculates the average increase over time. Because of this model choice the stability of the estimates relies on the amount of data points used for fitting which is the predefined first number of subsequently obtained sensor data points. This parameter can be chosen by a domain expert and input to the monitoring device 200 via the user-input unit 204. If enough data points for building a regression model are available, it is determined whether the actual sensor data point belongs to the learned regression model. If there are not enough data points available, the algorithm proceeds with the next iteration and obtains next data point, see step S1.

To determine whether the actual sensor data point z(t) belongs to the learned regression model, the user has the option to select on what basis the test should be conducted.

First option is to set the significance level for a statistical test which decides under the statistical significance of a cumulative deviation between forecasts and the actual values of the next data points. This means that the actual data points belongs to the learned regression model, if the statistical significance of a cumulative deviation between values resulting from the slope equation and a test set of sensor data points including the actual data point is below a predefined second threshold.

As a second option the actual data points belong to the learned regression model if the cumulative deviation between the values resulting from the slope equation and test set of sensor data point including the actual data point is inside a predefined confidence band. If the cumulative deviation is outside the predefined confidence band, the actual sensor data point does not belong to the learned regression model.

Diagram 320 shows the resulting time series of sensor data points 103' and 104' indicating for each sensor data point of the time series whether it is an outlier, represents a jump deviation or belongs to a segment representing subsequent sensor data points represented by one regression model and therefore belonging to this dedicated segment.

In an additional optional step S7 the determined segments are classified into categories by setting a predefined third threshold on a normalized slope coefficient of subsequent segment comprising all sensor data points of subsequently learned regression models having a slope in a predefined value range. For example, the slopes are classified into 3 different categories of slope coefficients: increase, decrease and stationary. Again, the user has the possibility to define on which basis this classification should take place. Here the segments are categorised according to a predefined threshold on a normalized slope coefficient of subsequent segments comprising all sensor data points of the learned regression models having a slope in a predefined value range, see step S7. This allows to merge similar slopes into larger segments also named "categories". In diagram 330 these categories 331, 332 and 333 are shown, wherein category 331 shows an increasing slope, category 332 shows a steady course and category 333 comprises subsequent segments of decreasing slope.

The described steps are performed for all sensor data points of the first sensor e.g. for all sensor data points of time series of sensor 103 in diagram 300. After that the time series of data points of the second sensor, i.e. time series 104 is processed in the same manner. When a new data point is obtained during an online monitoring for at least one of the sensors, than all the new sensor data point are processed one after the other as actual sensor data points based on the slopes of the regression models generated for the respective time series of these sensors.

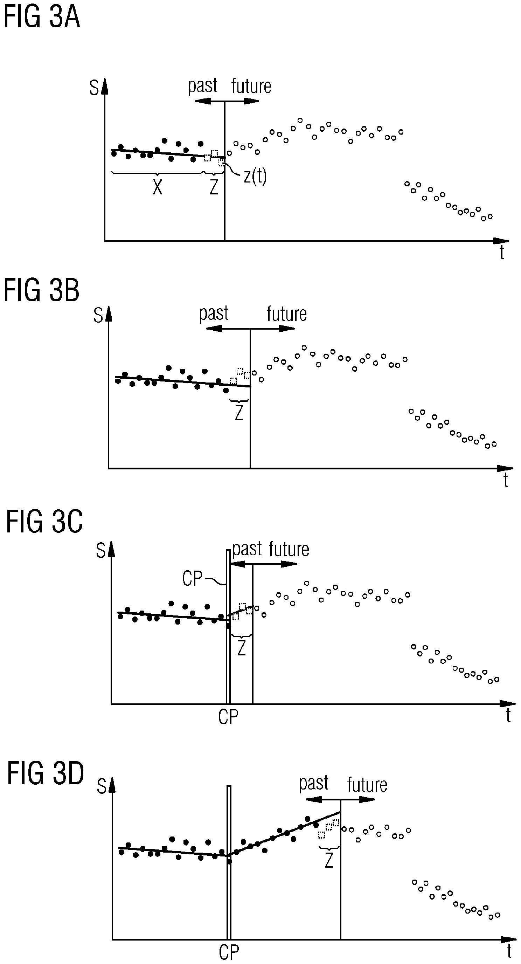

The determination of the slope by the regression model is explained and illustrated in more detail by Figures 3A - 3H. Figure 3A shows as times series of sensor data points wherein the data point marked by reference sign X have already been processed and are used for calculating the slope, i.e. applied in the learned regression model. The data points marked by reference sign Z are the test set Z of sensor data points which are used to determine whether the actual sensor data point z(t) belongs to the learned regression model. The test set Z includes actual sensor data point z(t), e.g. as last sensor data point in time considered by the regression model. A minimum amount of sensor data points building a test set Z is given by the predefined fourth number of sequent obtained sensor data points.

Given a minimal set of data points $X = (x_t, x_{t+1}, ..., x_{t+T}) \in R^T$, where t represents time and a minimum amount of time points T, i.e. the first predefined number, is preferably larger than 3.

The regression model for the slope is defined via the equation

$$x_t = \gamma_0 + \gamma_1 t + \epsilon_t \text{ with } \epsilon_t \sim N(0, \sigma^2) \quad (1),$$

where $N(0, \sigma^2)$ denotes the normal distribution with expectation zero and variance $\sigma^2$. This model is used to describe the regime where the sensor data points continuously evolve over time. The data points X are used for learning the average slope of a straight line. The sensor data points Z represent newly incoming data points which are tested whether they still belong to the line.

The average slope is defined via $E[x_t] = \gamma_0 + \gamma_1 t$ with $\gamma_1$ being the slope and $E[x_t]$ denotes the expected value of the sensor data point at time t. The model itself has 3 parameters $\Gamma = (\sigma^2, \gamma_0, \gamma_1)$. These parameters can be learned from the sensor data points. The learned parameters are denoted by $\hat{\Gamma} = \hat{\gamma}_0, \hat{\gamma}_1, \hat{\sigma}^2$, i.e. the "hat" over the parameters indicate that the values are learned from the sensor data. Those learned parameters should be as close as possible to the values of the real time series of sensor data points. This is achieved by minimizing a distance measure, e.g. an Euclidian distance between the sensor data points X and the slope equation:

$$(\hat{\gamma}_0, \hat{\gamma}_1) = argmin_{\gamma_0, \gamma_1} \left\{ \sum_{i \in \{0,1,...,T\}} \left( x_{t+i} - \gamma_0 - \gamma_1(t+i) \right)^2 \right\} \quad (2)$$

In equation (2) the squared distances between the observed data points X and the regression model are summed up and the optimum parameter value are determined by minimizing the squared distance by varying $(\gamma_0, \gamma_1)$.

As the regression model according to equation (1) itself is based on a normal distribution, the variance needs to be determined. The variance is the average quadratic deviation between the regression model and the data points X and can be used as a measure of how strongly the data point deviates from the model. The variance can be calculated by

$$\hat{\sigma}^2 = \frac{1}{T} \sum_{i \in \{0,1,...,T\}} \left( x_{t+i} - \hat{\gamma}_0 - \hat{\gamma}_1(t+i) \right)^2 \quad (3).$$

Based on the estimated parameter $\hat{\Gamma} = \hat{\gamma}_0, \hat{\gamma}_1, \hat{\sigma}^2$ from equation (2) and (3), it is possible to test whether newly incoming actual data points z(t) still fit to the regression model. In case they do not fit to the regression model the algorithm is reiterated. In case they fit to the regression model we include the data points in the dataset X and learn new parameters as described above.

Newly incoming data points $Z = (z_{T+1}, z_{t+2}, ..., z_{t+\tau}) \in R^\tau$ with $\tau$ being the number of new data points considered as test set. The number of data points in the test set can be any number greater than 0. Now it must be decided whether the new test set of data points Z belong to the learned regression model. Here, two approaches either a probability-based approach or an approach based on a confidence band can be applied.

For the probability-based approach a statistical test is based on the probability of finding points that fit even worse to the current regime. Assuming that the new data point Z would belong to the current slope, it holds for each $i \in \{1,...,\tau\}$

$$z_{T+i} \sim N(\hat{\gamma}_0 + \hat{\gamma}_1(T+i), \hat{\sigma}^2)$$

And consequently, a new test variable *T* follow a certain normal distribution:

$$T := \frac{1}{\tau} \sum_{i \in \{1,\ldots,\tau\}} \left(z_{T+i} - \hat{\gamma}_0 + \hat{\gamma}_1(T+i)\right) \sim N\left(0, \left(\frac{\hat{\sigma}}{\sqrt{n}}\right)^2\right)$$

Based on this result the probability is calculated to find points that do fit even less into the current state as variable *T*. The normed and averaged data points *Z* are tested against the current model via the formula:

$$P(T) := 2 \int_{-\infty}^{-|T|} \frac{1}{\sqrt{\left(\frac{2\pi\hat{\sigma}}{n}\right)}} e^{-\left(\frac{x}{\left(\frac{\hat{\sigma}}{\sqrt{n}}\right)}\right)^2} dx$$

i.e. *P(T)* gives the probability of finding points that do fit even less than the observed ones to the current regression model and in turn it can be interpreted as evidence for $Z = (z_{T+1}, z_{t+2}, \ldots, z_{t+\tau}) \in R^\tau$ belonging to the current slope. I.e. if *P(T)* is high it is rather certain that the new points belong to the current slope.

This can now be tested using a predefined significance level $\alpha$, i.e. $\alpha = 0.1$, if a probability of 10 % is excepted for finding points that fit even worse to the current regime.

If now

$$P(T) > \alpha$$

the hypothesis is accepted that $Z = (z_{T+1}, z_{t+2}, \ldots, z_{t+\tau}) \in R^\tau$ belongs to the current slope and hence there is no evidence for a change point CP, see Figure 3A, where the data point z(t) are determined to belong to the regression model of the senor data point X.

If

$$P(T) \leq \alpha \quad,$$

it is hard to find data points that fit even worse to the regression model and it can be concluded that the data points *Z* do no longer belong to the current slope which induces a change point CP, see Figure 3B and Figure 3C.

In the confidence-band based approach the parameter $\hat{\sigma}^2$ defines which range of deviations between the regression model and the new data points *Z* can be regarded as normal. Using again the test statistics of a cumulative deviation:

$$T := \frac{1}{\tau} \sum_{i \in (1,\ldots,\tau)} (z_{T+i} - \hat{\gamma}_0 + \hat{\gamma}_1(T+i)) \sim N\left(0, \left(\frac{\hat{\sigma}}{\sqrt{n}}\right)^2\right)$$

it is checked whether the new data points *Z* can be regarded as normal.

Given the normal distribution it holds that we can define η and decide that the new sensor data points *Z* belong to the current slope if the cumulative deviation T is in the range given by:

$$T \in \left(-\eta\frac{\hat{\sigma}}{\sqrt{n}}, \eta\frac{\hat{\sigma}}{\sqrt{n}}\right)$$

Hence no change point CP can be found. However, it is decided that the test set *Z* does not belong to the model and therefore a change point CP is found, if *T* is outside the interval of confidence range, see

$$T \notin \left(-\eta\frac{\hat{\sigma}}{\sqrt{n}}, \eta\frac{\hat{\sigma}}{\sqrt{n}}\right) \ .$$

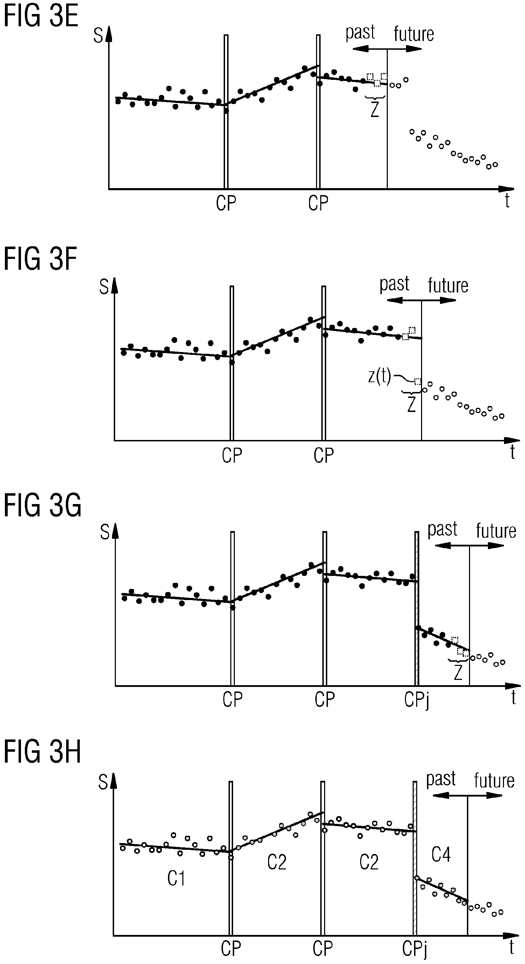

The same procedure is iterated for proceeding actual data points $Z$ as shown in Figures 3D and 3E.

Figure 3F shows a situation where an abrupt change in the value of the actual sensor data point is detected. Here the actual data point z(t) is determined as an outlier. If the predefined third number of the sequent data point z(t) are marked as outliers, the first outlier represent a jump discontinuity. The first sensor data point marked as outlier represent a change point induced by a jump discontinuity CP and a new regression model is learned for the subsequent data points, see Figure 3G.

When a complete time series of sensor data points has been assigned into segments of the same slope, these segments are classified in larger segments, called categories, of similar slope. In Figure 3H, the categories C1, C3 are of category stationary slope, category C2 is of increasing slope and category C4 is of decreasing slope.

Because each sensor is separately processed its scales to high dimensional data. This is also true for processing individual time series since the regression-based calculation of a slope is of a low processing complexity. No step of the proposed algorithm requires dimension reduction or any transformation of the time series of sensor data points and hence all results are interpretable by the domain expert and can be visualised as shown in diagram 330 of Figure 2. Furthermore, both jump discontinuities and slope changes can be related to a specific physical process and therefore, can be easily interpretable. Due to the different possibilities of setting parameters, the expert is enabled to incorporate his domain knowledge. Nevertheless, it is also possible to run the algorithm with default parameter settings.

It is to be understood that the above description of examples is intended to be illustrative and that the illustrated concepts are susceptible to various modifications.

**Claims**

1. Monitoring device (200) for segmenting different time series of sensor data points representing at least one measured parameter of a technical system (100) to detect different types of physical processes of the technical system (100), comprising
   an analysing unit (202) configured to iteratively for each sensor data point of a time series of sensor data points and iteratively for each time series of all different sensors,

   - obtain (S1) an actual sensor data point,
   - determine whether the actual sensor data point is an outlier (S3) and mark it accordingly,
   - determine (S4) whether the actual data point represents a discontinuity,
   - determine a slope (S5) by a regression model of a slope equation of a straight line in time fitted to at least a predefined first number of subsequently obtained sensor data points, and determine whether the actual sensor data point belongs to the learned regression model,
   - if the actual sensor data point does not belong to the learned regression model, determine a new slope by learning a new regression model based on the actual data point and a predefined second number of preceding sensor data points, and
   - create (S6) a segment comprising all sensor data points of one learned regression model, and

   a display unit configured to

   - display each sensor data point of the time series of sensor data points indicating the determined segment or being an outlier.

2. Monitoring device according to claim 1, wherein the analysing unit (202) is configured to determine a change of an operation mode by additionally evaluating a sensor data value of a sensor indicating an operation mode of the technical system (100) for the point in time of the actual sensor data point.

3. Monitoring device according to any of the preceding claims, wherein the actual sensor data point is determined as an outlier, if a relative change between the values of the actual sensor data point and an adjacent sensor data point exceeds a predefined first threshold.

4. Monitoring device according to any of the preceding claims, wherein a discontinuity is determined, if a predefined third number of subsequent data points preceding the actual sensor data point are marked as outliers.

5. Monitoring device according to any of the preceding claims, wherein the slope is determined by the regression model minimizing a first distance measure between the subsequently obtained sensor data points and the slope equation.

6. Monitoring device according to any of the preceding claims, wherein the actual data point belongs to the learned regression model, if a statistical significance of a cumulative deviation between the values resulting from the slope equation and a test set ($Z$) of sensor data points including the actual data point is below a predefined second threshold.

7. Monitoring device according to any of claims 1 - 5, wherein the actual data point belongs to the learned regression model, if the cumulative deviation between the values resulting from the slope equation and a test set ($Z$) of sensor data points including the actual data point is inside a predefined confidence band.

8. Monitoring device according to claim 6, wherein the actual sensor data point does not belong to the learned regression model, if the cumulative deviation lies outside a predefined confidence-band.

9. Monitoring device according to any of the preceding claims, wherein the determined segments are classified (S7) into categories by setting a predefined third threshold on a normalized slope coefficient of subsequent segments comprising all sensor data points of subsequently learned regression models having a slope in a predefined value range.

10. Monitoring device according to any of the preceding claims, comprising a user input unit (204) configured to receive at least one of a value for the first, second, third or fourth number of data points and/or the first, second or third threshold from a domain expert.

11. Monitoring device according to any of the preceding claims, wherein each time series of the different sensors is separately processed.

12. Monitoring device according to any of the preceding claims, wherein an individual leaning model is created for the different sensors and merged into one single model.

13. Monitoring device according to any of the preceding claims, wherein the segments and/or categories are assigned to physical processes of the technical system.

14. Method for segmenting different time series of sensor data points representing at least one measured parameter of a technical system (100) to detect different types of physical processes of the technical system (100), comprising iteratively for each sensor data point of a time series of sensor data points and iteratively for time series of all different sensors

   - obtaining (S1) an actual sensor data point,
   - determining (S3) whether the actual data point is an outlier and marking it accordingly,
   - determining whether the actual data point represents a discontinuity (S4),
   - determining a slope (S5) by a regression model of a slope equation of a straight line in time fitted to at least a predefined first number of subsequently obtained sensor data points, and determining whether the actual sensor data point belongs to the learned regression model,
   - if the actual sensor data point does not belong to the learned regression model, determining a new slope by learning a new regression model based on the actual data point and a predefined second number of preceding sensor data points, and
   - creating a segment (S6) comprising all sensor data points of one learned regression model, and
   - displaying each sensor data point of the time series of sensor data points indicating the determined segment or being an outlier.

15. A computer program product directly loadable into the internal memory of a digital computer, comprising software code portions for performing the steps of claim 14 when said product is run on said digital computer.

FIG 1

FIG 2

## FIG 3A

## FIG 3B

## FIG 3C

## FIG 3D

FIG 3E

FIG 3F

FIG 3G

FIG 3H

Europäisches
Patentamt

European
Patent Office

Office européen
des brevets

# EUROPEAN SEARCH REPORT

Application Number

EP 20 19 8778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 341 106 B1 (SCOLNICOV HAGGAI [IL] ET AL) 25 December 2012 (2012-12-25) * abstract; figure 1 * * column 4, line 65 - column 9, line 49 * ----- | 1-15 | INV. G06Q10/00 G06Q50/04 |
| X | WO 2017/034512 A1 (HEWLETT PACKARD ENTPR DEV LP [US]) 2 March 2017 (2017-03-02) * abstract; figures 1,4 * * paragraph [0044] - paragraph [0045] * * paragraph [0085] - paragraph [0101] * ----- | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 27 April 2021 | Peller, Ingrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 19 8778

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2021

| Patent document cited in search report | | Publication date | Patent family member(s) | | Publication date |
|---|---|---|---|---|---|
| US 8341106 | B1 | 25-12-2012 | EP | 2788724 A2 | 15-10-2014 |
| | | | JP | 5666757 B1 | 12-02-2015 |
| | | | JP | 2015507245 A | 05-03-2015 |
| | | | KR | 20140092385 A | 23-07-2014 |
| | | | US | 8341106 B1 | 25-12-2012 |
| | | | US | 2013332090 A1 | 12-12-2013 |
| | | | WO | 2013084068 A2 | 13-06-2013 |
| WO 2017034512 | A1 | 02-03-2017 | NONE | | |

EPO FORM P0459

For more details about this annex : see Official Journal of the European Patent Office, No. 12/82